(19) Europäisches Patentamt / European Patent Office / Office européen des brevets

(11) **EP 2 504 120 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(21) Anmeldenummer: **10781512.8**

(22) Anmeldetag: **24.11.2010**

(51) Int Cl.:
**B23K 1/00** *(2006.01)* **B23K 3/02** *(2006.01)*

(86) Internationale Anmeldenummer:
**PCT/EP2010/068096**

(87) Internationale Veröffentlichungsnummer:
**WO 2011/064239 (03.06.2011 Gazette 2011/22)**

(54) **VERFAHREN UND VORRICHTUNG ZUR QUANTITATIVEN BESTIMMUNG VON LÖTMITTELRESTEN**

METHOD OF AND DEVICE FOR QUANTITATIVELY DETERMINING SOLDERING AGENT RESIDUES

PROCÉDÉ ET DISPOSITIF DE DÉTERMINATION QUANTITATIVE DE RÉSIDUS DE BRASURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2009 DE 102009055610**

(43) Veröffentlichungstag der Anmeldung:
**03.10.2012 Patentblatt 2012/40**

(73) Patentinhaber: **MAHLE Behr GmbH & Co. KG**
**70469 Stuttgart (DE)**

(72) Erfinder:
• **MAMBER, Oliver**
**71706 Markgröningen (DE)**

• **KOCH, Hans**
**71254 Ditzingen (DE)**

(74) Vertreter: **Grauel, Andreas**
**Grauel IP**
**Patentanwaltskanzlei**
**Wartbergstrasse 14**
**70191 Stuttgart (DE)**

(56) Entgegenhaltungen:
**DE-A1-102006 013 428     JP-A- 4 172 171**
**JP-A- 2008 171 668     JP-A- 2009 255 152**
**US-A- 5 201 114**

EP 2 504 120 B1

**Beschreibung**

Die Erfindung betrifft ein Verfahren zur quantitativen Bestimmung von Löthilfsmittelresten, die nach einem vorangehenden Bearbeitungsschritt an einem Werkstück verbleiben, bei dem das Werkstück mit einem Fluid beaufschlagt wird gemäß dem Oberbegriff des Anspruch 1. Weiterhin betrifft die Erfindung eine Vorrichtung, für die Durchführung des Verfahrens gemäß dem Oberbegriff des Anspruchs 11. Darüber hinaus betrifft die Erfindung ein Verfahren zur Dimensionierung eines Werkstücks und/oder eines sonstigen Bauteils siehe Anspruch 13.

Bei der Bearbeitung von Werkstücken ist es bei bestimmten Bearbeitungsschritten üblich und oftmals auch erforderlich, dass diese vorab mit einem den Bearbeitungsschritt unterstützenden Hilfsmaterial beaufschlagt werden. Ein typisches Beispiel hierfür liegt bei Lötvorgängen (Weichlötvorgänge und/oder Hartlötvorgänge), sowie gegebenenfalls auch bei Schweißvorgängen vor. Hierbei werden die miteinander zu verbindenden Materialien in aller Riegel vorab mit einem sogenannten Flussmittel beaufschlagt, welches beispielsweise in Form eines Pulvers auf die miteinander zu verbindenden Bauteile aufgestreut wird, bevor der eigentliche Lötvorgang (bzw. Schweißvorgang) durchgeführt wird. Das Flussmittel bewirkt dabei beim Erhitzen zur Durchführung des Lötvorgangs (bzw. Schweißvorgangs) eine Reinigung der Bauteiloberflächen, sodass die schlussendlich entstehende Lötnaht (bzw. Schweißnaht) fester, haltbarer und dichter ausgebildet werden kann.

Die Verwendung von Flussmitteln erweist sich zwar als vorteilhaft bel der Bearbeitung des Werkstücks. Üblicherweise zieht die Verwendung von Flussmitteln auch am Werkstück verbleibende Flussmittelreste und die damit einhergehenden Nachteile nach sich. Insbesondere können nach der Fertigstellung des Werkstücks an diesem verbliebenen Lötmittelreste die Funktion und Haltbarkeit anderer, mit dem gelöteten Werkstück zusammen arbeitender Komponenten und gegebenenfalls auch des Werkstücks selbst, beispielsweise durch Korrosion beeinträchtigen. Zwar ist es grundsätzlich möglich, die Lötmittelreste nach Abschluss des Lötvorgangs vom Werkstücks zu entfernen (beispielsweise durch Waschen), dies kann sich jedoch als kostenintensiv und aufwändig erweisen, insbesondere dann, wenn man auch die anschließend erforderlich werdenden Trockenvorgänge des Werkstücks in Betracht zieht. Eine derartige Vorrichtung zum Entfernen von Lötrückständen bei Gegenständen ist beispielsweise in der deutschen Patentschrift DE 38 40 098 C1 oder im japanischen Patent Abstract JP 04172171 A (nächstliegender Stand der Technik) beschrieben. Auch eine Verringerung der Menge des eingesetzten Flussmittels ist nicht ohne weiteres möglich, da eine derartige Mengenreduktion des Flussmittels eine Verschlechterung des Lötergebnisses nach sich ziehen kann, was ebenfalls unerwünscht ist.

Die genannten Probleme treten insbesondere dann im besonderen Ausmaß zutage, wenn es um die Bearbeitung von Werkstücken geht, die besonders feine Strukturen und/oder besonders viele gebogene Oberflächen (insbesondere auch mit kleinen Krümmungsradien) und zum Teil geschlossene Hohlräume aufweisen. Als Beispiel für derartige Werkstücke sind beispielsweise Wärmeübertrager, insbesondere Wärmeübertrager für Kraftfahrzeuge zu nennen. Aus Grund der vielfältigen Hohlräume bei derartigen Wärmeübertragern erweist sich ein Waschen der Wärmeübertrager nach dem Löten als langwierig und problematisch. Eine Verringerung der Menge an eingesetztem Flussmittel verbietet sich ebenfalls, da aufgrund des großen Anteils der miteinander zu verlötenden Teile die Gefahr einer Undichtigkeit sehr schnell auf nicht mehr akzeptable Werte ansteigen würde.

Ein weiteres, in der Praxis auftretendes Problem, besteht darin, dass bei der Verwendung von Löthilfsmitteln, insbesondere von Flussmitteln, oftmals auf Erfahrungswerte zurückgegriffen wird, wenn es darum geht, die bei der Bearbeitung des Werkstücks einzusetzende Menge an Löthilfsmitteln zu bestimmen. Diese Erfahrungswerte orientieren sich dabei in aller Regel am fertigen Lötergebnis (also insbesondere dahingehend, ob es beim Lötvorgang zu Undichtigkeiten kommt, oder nicht). Da ein Nachlöten von Werkstücken relativ aufwändig und teurer ist, besteht daher die Neigung, die Menge an eingesetztem Löthilfsmittel tendenziell höher als die eigentlich erforderliche Menge zu wählen (für Ausschuss-Werkstücke gilt das gleiche analog). Dies führt nicht nur zu einem unnötig hohen Verbrauch an Löthilfsmitteln (was entsprechende Produktionskosten und eine an sich unnötige Umweltbelastung mit sich bringt), sondern auch dazu, dass das Werkstück sowie andere, gemeinsam mit dem Werkstück betriebene Bauteile einer Maschine, durch die (unnötig) hohen Löthilfsmittelreste einem entsprechend höheren Verschleiß ausgesetzt sind, und entsprechend haltbarer konstruiert werden müssen. Auch dies führt zu Nachteilen, wie insbesondere Kostennachteilen und Gewichtsnachteilen.

Die Aufgabe der Erfindung besteht somit darin, gegenüber dem Stand der Technik verbesserte Wärmeübertager zu realisierten, welche insbesondere definiertere Eigenschaften aufweisen.

Ein Verfahren und eine Vorrichtung gemäß der Erfindung sind in Ansprüchs 1 und 11 definiert. Es wird vorgeschlagen, ein Verfahren zur quantitativen Bestimmung von Löthilfsmittelresten, insbesondere von Flussmittelresten, die nach einem vorangehenden Bearbeitungsschritt an einem Werkstück verbleiben, bei dem das Werkstück mit einem Fluid beaufschlagt wird, derart auszuführen, dass aus der Konzentration an Löthilfsmittel im Fluid auf die nach dem vorangehendem Bearbeitungsschritt am Werkstück verbliebene Menge an Löthilfsmittel geschlossen wird. Es ist also möglich, das Werkstück nach einem, mehreren oder allen zur Fertigstellung des Werkstücks erforderlichen Bearbeitungsschritten gewissermaßen mit dem verwendeten Fluid zu waschen. Anstatt das Fluid nach dem Waschvorgang wiederzuverwerten, zu entsorgen bzw. zu rezyklieren wird gemäß dem vorgeschlagenen Verfahren die in dem zum Waschen verwendeten Fluid enthaltene Konzentration an Löthilfsmittel (insbesondere Flussmittel) gemessen. Mit Hilfe der gemessenen Konzentration (bzw. der gemessenen Konzentrationsänderung) ist es möglich, auf die vor der Fluidbeaufschlagung vorhandene Menge an Löthilfsmittel am und/oder im (fertig) bearbeiteten Werkstück zu schließen. Dazu ist es in aller Regel sinnvoll, die Konzentration von Löthilfsmittel im Fluid nach jedem einzelnen "gewaschenen" Werkstück zu bestimmen (gegebenenfalls ist auch eine Konzentrationsmessung vor dem "Waschvorgang" sinnvoll und/oder erforderlich). Selbstverständlich kann auch eine Art statistischer Mittelung genutzt werden, indem eine gewisse Anzahl (beispielsweise drei) Wärmeübertrager unmittelbar hintereinander "gewaschen" werden, und die Konzentrationsmessung beziehungsweise die Messung der Konzentrationsänderung erst nach dieser Mehrzahl von Wärmeübertragern erfolgt (wobei bei der anschließenden Berechnung die Anzahl der Wärmeübertrager selbstverständlich berücksichtigt wird). Die vorgeschlagene Konzentrationsmessung "pro Werkstück" unterscheidet sich von bisherigen Reinigungsverfahren, bei denen die Konzentration an Löthilfsmittel in einer Waschflüssigkeit gemessen wird. Denn bei den bisherigen Verfahren (siehe beispielsweise JP 04172171 AA oder DE 38 40 098 C1) wird die jeweils gemessene Konzentration an Löthilfsmittel lediglich dazu verwendet, um zu bestimmen, ob die Waschflüssigkeit erneuert werden muss, oder noch weiter verwendet werden kann. Es ist möglich, das Verfahren insbesondere ganz am Ende der Herstellungskette des Werkstücks durchzuführen. Gegebenenfalls kann es sich aber auch als vorteilhaft erweisen, das Verfahren bereits vorher, also nach einem Zwischenschritt in der Herstellungskette des Werkstücks durchzuführen. Die Beaufschlagung des Werkstücks mit dem Fluid kann derart durchgeführt werden, dass die am und/oder im Werkstück verbliebene Menge an Löthilfsmittel im Wesentlichen vollständig entfernt wird. Ebenfalls ist es aber auch möglich, das Verfahren derart durchzuführen, dass ein möglichst genau definierter Anteil an am und/oder im Werkstück verbliebenen Löthilfsmittel vom Fluid aufgenommen wird. Auch in einem derartigen Fall ist es möglich, aus der Konzentration an Löthilfsmittel im Fluid auf die im nach dem voran gehenden Bearbeitungsschritt am Werkstück verbliebene Menge an Löthilfsmittel zu schließen. Bei dem Fluid kann es sich selbstverständlich auch um ein beliebiges Gemisch unterschiedlicher Fluide handeln. Insbesondere kann es sich um eine Flüssigkeit, ein Flüssigkeits-Gas-Gemisch und/oder um ein überkritisches Fluid handeln. Das Fluid kann dabei auch eine gewisse Menge an Feststoffpartikeln und/oder Gasen aufweisen. Auch ein Gas-Feststoff-Gemisch ist gegebenenfalls denkbar. Selbstverständlich kann es sich auch bei den Löthilfsmitteln um ein Gemisch unterschiedlicher Löthilfsmittel handeln. Das vorgeschlagene Verfahren ist insbesondere dazu geeignet, dass es insbesondere bei einer Serienproduktion stichprobenartig ausgeführt wird und/oder im Vorfeld zur Planung einer Serienproduktion im Rahmen von Vorserien bzw. Technikumsserien verwendet wird. Anhand der mit Hilfe des vorgeschlagenen Verfahrens ermittelten Messwerte ist es insbesondere möglich, die für die Bearbeitung des Werkstücks erforderliche Menge an Löthilfsmitteln besonders geeignet (insbesondere gerade eben ausreichend) zu wählen. Dadurch ist es insbesondere bei einem späteren Einsatz des Werkstücks möglich, die Belastung des Werkstücks sowie weiterer, mit dem Werkstück im eingebauten Zustand interagierender weiterer Bauteile zu verringern und/oder die resultierende Belastung beim Design des Werkstücks bzw. der sonstigen Bauteile von vorne herein zu berücksichtigen. Dadurch kann die Haltbarkeit der resultierenden Anlage erhöht bzw. besser an die Lebensdauer der Gesamtanlage angepasst werden. Weiterhin ist es unter Berücksichtigung der mit dem vorgeschlagenen Verfahren ermittelten Werte insbesondere auch möglich, die Menge an eingesetzten Löthilfsmitteln zu verringern, um dadurch Kosten zu sparen und eine unnötige Umweltbelastung zu verringern.

Besonders vorteilhaft ist es, wenn das vorgeschlagene Verfahren derart durchgeführt wird, dass hierfür eine definierte Menge an Fluid verwendet wird. Dadurch ist es beispielsweise besonders einfach möglich, von der Konzentration an Löthilfsmittel im Fluid auf die verbliebene Menge an Löthilfsmittel am und/oder im Werkstück zu schließen. Darüber hinaus ist es dadurch möglich, die "Testumgebung" besonders gut an die spätere, reale Einbausituation anzupassen. Wenn es sich bei dem Werkstück beispielsweise um einen Kühlmittelkühler für ein Kraftfahrzeug handelt, so kann das Messverfahren insbesondere mit einem Fluidvolumen durchgeführt werden, dass dem Volumen an Kühlmittel im Kraftfahrzeugkühlmittelkreislauf entspricht. Natürlich ist es ebenso möglich, das Verfahren auch mit wechselnden Fluidmengen durchzuführen, die Menge an Fluid zu bestimmen und die gewonnenen Werte geeignet umzurechnen.

Besonders vorteilhaft ist das Verfahren darüber hinaus, wenn es sich bei dem vorangehenden Bearbeitungsschritt um einen Lötvorgang handelt. In einem solchen Fall können sich die mit Hilfe des Verfahrens gewonnenen Messwerte als besonders aussagekräftig im Hinblick auf eine Optimierung des Lötverfahrens (insbesondere hinsichtlich der verwendeten Löthilfsmittelmenge) erweisen. Möglich ist es aber auch, das Verfahren zu einem anderen Zeitpunkt durchzuführen, wie insbesondere ganz am Ende des Herstellungsverfahrens des Werkstücks.

Gemäß der Erfindung erweist sich das Verfahren, wenn es sich bei dem Werkstück zumindest teilweise um eine Wärmeübertragervorrichtung handelt. Gerade Wärmeübertrager weisen bei heutigen Bauformen (Rohrkasten-Flachrohr-Wärmeübertrager mit Wellrippen) eine besonders hohe Anzahl an Lötstellen auf, wobei es bei einer großen Anzahl dieser Lötstellen zusätzlich darauf ankommt, dass diese fluiddicht ausgeführt sind. Weiterhin weisen diese eine relativ große Anzahl an inneren Hohlräumen auf. Dementsprechend existiert bei derartigen Wärmeübertragern ein besonders großes Potenzial an Optimierungsmöglichkeiten hinsichtlich des Lötvorgangs sowie der Haltbarkeit des Werkstücks und weiterer, in einem Betriebszustand mit dem Werkstück interagierender Komponenten auf.

Besonders vorteilhaft ist es weiterhin, wenn das Werkstück zumindest bereichsweise aus Aluminium, aus einer Aluminiumlegierung, aus Buntmetall und/oder aus einer Buntmetalllegierung gefertigt ist. Gerade derartige Materialien erfordern zu deren Bearbeitung, insbesondere zu deren Verlötung und/oder Verschweißung oftmals Löthilfsmittel, damit diese sinnvoll bzw. überhaupt bearbeitet werden können.

Weiterhin wird vorgeschlagen, dass bei der Durchführung des Verfahrens als Fluid eine wässrige Lösung, Wasser und/oder ein Kraftfahrzeug-Kühlmittel verwendet wird. Insbesondere kann es sich um Wasser (speziell entionisiertes Wasser) handeln, welches mit Zuschlagstoffen wie beispielsweise mit einer Säure und/oder einer Lauge versehen wird. Derartige Fluide haben sich in ersten Versuchen als besonders vorteilhaft zur Durchführung des Verfahrens beziehungsweise zur Gewinnung besonders aussagekräftiger Werte erwiesen. Besonders vorteilhafte Ergebnisse wurden dabei bei einem Gemisch aus Wasser (speziell entionisiertem Wasser) und Ameisensäure erzielt, wobei die Konzentration an Ameisensäure bevorzugt einem Intervall entnommen ist, dessen Ober- bzw. Untergrenze 0 %, 5 %, 10 %, 15 %, 20 %, 25 % und/oder 30 % ist.

Insbesondere kann es sich bei der Durchführung des Verfahrens als vorteilhaft erweisen, wenn das Fluid neutral, alkalisch und/oder sauer ist. Die Wahl des ph-Werts kann insbesondere im Hinblick auf die spätere Verwendung des Werkstücks und/oder im Hinblick auf spätere, von einem Kunden verlangte Spezifikationen bzw. Testverfahren gewählt werden.

Gemäß der Erfindung wird das Verfahren derart durchgeführt, dass das Werkstück lediglich in einem Betriebskontaktbereich mit dem Fluid beaufschlagt wird, in dem das Werkstück in einem normalen Betriebszustand mit einem Fluid, insbesondere mit einer Flüssigkeit, speziell mit einer wässrigen Flüssigkeit, in Kontakt kommt. Um beim Einsatzbeispiel insbesondere eines Kühlmittelkühlers zu bleiben, wird das Messverfahren derart durchgeführt, dass das Messfluid lediglich durch die Bereiche des Wärmeübertragers geleitet wird, die für die Durchströmung mit Kühlmittel vorgesehen sind. Die Außenbereiche des Wärmeübertragers, die mit Außenluft beaufschlagt werden, werden dagegen nicht mit dem Fluid beaufschlagt. In einem solchen Fall kann die Aussagekraft der mit Hilfe des vorgeschlagenen Verfahrens gewonnen Werte nochmals erhöht werden. Lediglich der Vollständigkeit halber sollte erwähnt werden, dass brauchbare Messergebnisse selbstverständlich auch auf anderem Wege gewonnen werden können, wie beispielsweise dadurch, dass zwei gleichartige Wärmeübertrager gemessen werden, von denen einer vollständig ("innen" und "außen") gewaschen wird, der andere dagegen nur "außen" gewaschen wird und die beiden gemessenen Werte zur Ermittlung des schlussendlichen Ergebnisses voneinander subtrahiert werden.

Weiterhin wird vorgeschlagen das Verfahren derart durchzuführen, dass es zumindest zeitweise, vorzugsweise zumindest anfänglich, unter definierten Bedingungen, insbesondere hinsichtlich der Werkstücktemperatur, der Fluidtemperatur, der Zeitdauer des Messvorgangs, dem Fluiddurchsatz durch das Werkstück, der Zusammensetzung des Fluids, dem Druck und/oder der Zeitdauer der Messung durchgeführt wird. Bei Verwendung derart definierter Bedingungen ist es insbesondere möglich, besonders aussagekräftige und reproduzierbare Messergebnisse gewinnen zu können. Bei ersten Versuchen hat es sich darüber hinaus gezeigt, dass insbesondere die genannten Parameter einen besonders großen Einfluss auf die Aussagekraft der gewonnen Messwerte haben.

Weiterhin wird vorgeschlagen, das Verfahren derart durchzuführen, dass es zumindest zeitweise und/oder zumindest teilweise als Kreislaufverfahren durchgeführt wird. Insbesondere kann es sich um ein geschlossenes Kreislaufverfahren handeln. Auf diese Weise ist es möglich, die verbliebene Menge an Löthilfsmittel besonders gut, insbesondere weitgehend vollständig, zu erfassen, ohne dass eine übermäßige Menge an Fluid erforderlich ist. Darüber hinaus kann sich die Messgenauigkeit des Verfahrens erhöhen, da schlussendlich ein relativ hoher Konzentrationswert im Fluid gemessen wird, was üblicherweise zu geringeren Messungenauigkeiten führt. Darüber hinaus kann der Verbrauch an Fluid verringert werden und beispielsweise die zur Durchführung des Verfahrens erforderliche Energie (insbesondere Heizenergie für das Fluid) verringert werden, was ebenfalls von Vorteil ist.

Weiterhin wird vorgeschlagen, dass bei dem Verfahren zur Ermittlung von Messwerten Messsensoren verwendet werden und/oder Proben entnommen werden. Messsensoren sind üblicherweise besonders geeignet, um besonders rasch Messwerte erhalten zu können, die in aller Regel auch ausreichend genau sind. Eine Probenentnahme kann insbesondere dazu verwendet werden, besonders genaue Messwerte zu erhalten bzw. fragwürdige Messwerte zu verifizieren. Darüber hinaus können entnommene Proben aufbewahrt werden, um zu einem späteren Zeitpunkt (beispielsweise bei einem Haftungsproblem) verwendet werden zu können.

Weiterhin hat es sich als vorteilhaft erwiesen, wenn bei dem Verfahren vor und/oder nach Durchführung einer Messung zumindest ein Reinigungsvorgang durchgeführt wird. Dadurch kann die Anlage gesäubert werden, sodass beispielsweise Löthilfsmittelreste aus früheren Messungen zuverlässig entfernt werden können, sodass diese nachfolgende Messungen nicht bzw. allenfalls geringfügig beeinflussen. Auch dies kann sich für die Zuverlässigkeit der ermittelten Messwerte als wesentlich erweisen.

Weiterhin wird eine Vorrichtung zur Durchführung des oben beschriebenen Verfahrens vorgeschlagen, die zumindest einen Testanschluss, zumindest eine Pumpeinrichtung und zumindest eine geschlossene Kreislaufeinrichtung aufweist. Insbesondere kann die Vorrichtung derart ausgebildet und eingerichtet sein, dass sie das oben beschriebene Verfahren durchführt. Der Testanschluss dient dabei insbesondere der möglichst einfachen und schnellen reversiblen Anordnung des zu prüfenden Werkstücks, wie insbesondere eines zu prüfenden Wärmeübertragers in der Vorrichtung. Hierbei können vorzugsweise Verbindungselemente verwendet werden, die zum gegebenenfalls ohnehin vorhandenen Verbindungsanschluss (zum Beispiel ein Flüssigkeitsftansch) des Werkstücks korrespondieren. Eine derart ausgebildete Vorrichtung weist die bereits vorab beschriebenen Eigenschaften und Vorteile in analoger Weise auf.

Es wird vorgeschlagen, die Vorrichtung vorzugsweise derart auszubilden, dass diese zumindest einen Ausgleichsbehälter zumindest eine Temperiereinrichtung, zumindest eine Sensoreinrichtung, zumindest eine vorzugsweise steuerbare Fluidzuführmöglichkeit, zumindest eine vorzugsweise steuerbare Fluidentnahmemöglichkeit und/oder zumindest eine Bypasseinrichtung aufweist. Mit Hilfe der elektronischen Steuereinrichtung ist es insbesondere möglich, besonders einfach zu ermittelnde, automatisierte, reproduzierbare und/oder besonders aussagekräftige Messwerte zu erzielen. Mit Hilfe einer Temperiereinrichtung (Heizung und/oder Kühlung) ist es insbesondere möglich, das Fluid auf eine geeignete Temperatur einzustellen. Unter Verwendung zumindest einer Sensoreinrichtung können unterschiedliche Werte erfasst werden, insbesondere die eigentlichen Messwerte, gegebenenfalls aber auch "Hilfswerte" wie die Fluidtemperatur oder dergleichen. Mit Hilfe der Fluidzuführmöglichkeit bzw. der Fluidentnahmemöglichkeit ist es möglich, Proben zu entnehmen, Zuschlagstoffe hinzuzufügen, das Fluid auszutauschen, aufzufüllen und/oder dergleichen. Vorzugsweise können dabei die Fluidzuführmöglichkeit und/oder die Fluidentnahmemöglichkeil extern gesteuert werden, wie insbesondere unter Verwendung der elektronischen Steuervorrichtung. Mit Hilfe eines Ausgleichbehälters ist es insbesondere möglich einen beispielsweise geschlossenen Kreislauf ausreichend befüllt zu lassen, auch wenn (gegebenenfalls mehrmals) Proben entnommen werden bzw. Flüssigkeit und/oder Zuschlagstoffe hinzugefügt werden. Eine Bypasseinrichtung ist insbesondere deshalb von Vorteil, weil das Fluid vorab konditioniert werden kann (beispielsweise durch Erhitzen oder Abkühlen; wobei das Fluid insbesondere besonders homogen konditioniert werden kann), ohne dass zunächst das zu prüfende Werkstück (der Prüfling) durchströmt wird. Dadurch ist es insbesondere möglich, die eigentliche Messung unter besonders gut reproduzierbaren Startbedingungen zu beginnen (Schließen des Bypasses und Öffnen des eigentlichen Kreislaufs), wodurch besonders aussagekräftige Messwerte gewonnen werden können.

Weiterhin wird ein Verfahren zur Dimensionierung eines Werkstücks und/oder eines sonstigen Bauteils vorgeschlagen, bei dem die Auslegung des Werkstücks und/oder des sonstigen Bauteils die Belastung des Werkstücks und/oder des sonstigen Bauteils mit vom Werkstück stammende Löthilfsmittelreste, insbesondere die Flussmittelreste, berücksichtig wird, wobei vorzugsweise das vorab beschriebene Verfahren zur quantitativen Bestimmung von Löthilfsmittelresten und/oder eine Vorrichtung vom vorab beschriebenen Aufbau verwendet wird. Mit Hilfe des vorgeschlagenen Verfahrens können die bereits vorab beschriebenen Vorteile und Eigenschaften in analoger Weise verwirklicht werden.

Im Folgenden wird die Erfindung anhand vorteilhafter Ausführungsbeispiele und unter Bezugnahme auf die beigefügte Zeichnung näher erläutert. Es zeigen:

Fig. 1:    den schematischen Schaltplan eines Ausführungsbeispiels einer Testanlage;
Fig. 2:    ein erstes Ausführungsbeispiel für den Ablauf eines Messverfahrens.

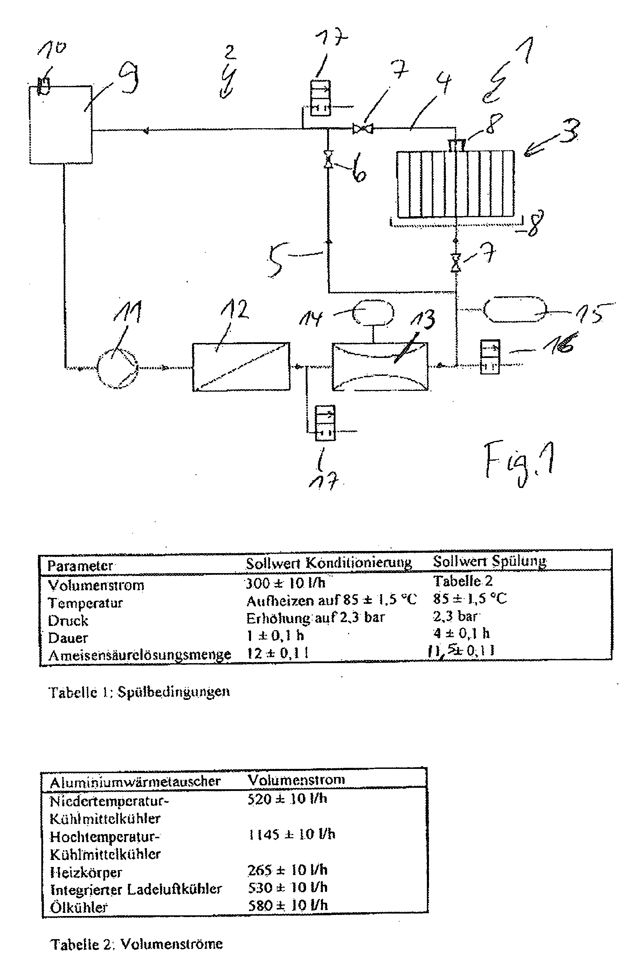

In Fig. 1 ist in schematischer Darstellung der Schaltplan eines ersten denkbaren Ausführungsbeispiels für eine Testanlage 1 gezeigt, mit der die Menge des in einem fertig gestellten, zu prüfenden Wärmeübertrager (Prüfling) 3 verbliebenen Flussmittels gemessen werden kann. Der Wärmeübertrager 3 wurde als an sich bekannter Flachrohr-Wärmeübertrager 3 mit seitlichen Rohrkästen, in die die Flachrohre eingesteckt und anschließend mit diesen verlötet werden, gefertigt. Der eigentliche Lötvorgang erfolgt dabei - in ebenfalls bekannter Weise - dadurch, dass die Flachrohre mit einem Lot beschichtet sind und der fertig zusammengesteckte und vorfixierte Wärmeübertrager 3 in einem Durchlaufheizofen erhitzt wird. Um ein akzeptables Lötergebnis zu erzielen, wird der fertig zusammengesteckte Wärmeübertrager 3 vor dem Erhitzen mit Flussmittel bestäubt, insbesondere mit einem flouroaluminathaltigen Flussmittel. Nach dem Abkühlen des Wärmeübertragers 3 verbleibt eine (zunächst unbekannte) Menge an überschüssigem Flussmittel im Inneren des Wärmeübertragers 3. Diese im Wärmeübertager 3 verbliebene Restmenge an Flussmittel soll unter Verwendung der Testaniage 1 ermittelt werden.

Wie man Fig. 1 entnehmen kann, umfasst der Spülkreislauf 2 der Testanlage 1 einen Hauptkreislauf 4, sowie als Nebenkreislauf einen sogenannten Bypass 5. Sowohl der Hauptkreislauf 4, als auch der Bypass 5 können über elektrisch ansteuerbare Ventile 6, 7 freigegeben bzw. gesperrt werden. Wie ebenfalls aus Fig. 1 ersichtlich, ist der zu prüfende Wärmeübertrager 3 in den Hauptkreislauf 4 des Spülkreislaufs 2 eingeschleift. Die Verbindung des Wärmeübertragers 3 mit dem Spülkreislauf 2 erfolgt über vorliegend nur schematisch skizzierte, an sich bekannte Standard-Verbindungselemente 8. Der Hauptkreislauf 4 weist darüber hinaus sowohl vor, als auch hinter dem zu prüfenden Wärmeübertrager 3 jeweils ein elektrisches Schaltventil 7 auf, sodass der Wärmeüberträger 3 ausgebaut werden kann, ohne dass der Spülkreislauf 2 notwendigerweise entleert werden muss. Lediglich der Vollständigkeit halber wird darauf hingewiesen, dass der Wärmeübertrager 3 klein Bauteil der Testanlage 1 ist, sondern jeweils nur zur Durchführung einer Messung in die Testanlage 1 eingebaut wird.

In den Spülkreislauf 2 der Testanlage 1 ist weiterhin ein Ausgleichsbehätter 9, eine elektrische Pumpe 11, eine Heizvorrichtung 12 (beispielsweise eine elektrische Heizung oder ein Wärmetauscher), sowie ein Durchflussmesser 13 mit einem dazugehörigen Durchflussmesssensor 14 eingeschleift. Weiterhin ist der Spülkreislauf 2 mit einem Temperaturmesssensor 15, einem Probenentnahmeventil 16, sowie zwei Ablassventilen 17 versehen. Das Probenentnahmeventil 16 sowie die beiden Ablassventile 17 sind - analog zur den Schaltventilen 6, 7 - als elektrisch ansteuerbare Ventile ausgeführt und können beispielsweise über eine (vorliegend nicht dargestellte) elektronische Steuerschaltung angesteuert werden. Die Messwerte des Durchflussmesssensors 16 sowie des Temperaturmesssensors 15 werden beim vorliegend in Fig. 1 dargesellten Ausführungsbeispiel ebenfalls in elektronischer Form ausgegeben, und können beispielsweise von der elektronischen Steuerschaltung verarbeitet werden. Darüber hinaus ist der Ausgleichsbehälter 9 mit einem Belüftungsventil 10 versehen, welches ebenfalls elektrisch ansteuerbar ist (wie beispielsweise durch die elektronische Steuerschaltung). Auch die Pumpleistung der elektrischen Pumpe 11, sowie die Heizleistung der Heizvorrichtung 12 können von der elektronischen Steuerschaltung geregelt werden.

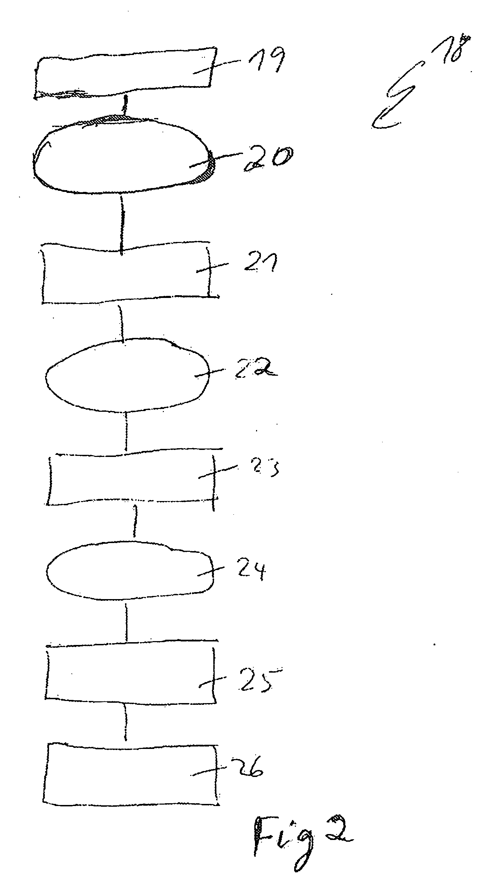

Ein Ausführungsbeispiel für einen Messablauf ist aus dem in Fig. 2 dargestellten Ablaufdiagramm 18 ersichtlich. Zu allererst wird die Testanlage 1 (sofern noch nicht erfolgt) initialisiert 19. Dazu wird der Spülkreislauf 2 der Testanlage 1 (genauer: der Spülkreislauf 2 mit dem Bypass 5 unter Umgehung des Hauptkreislaufs 4 bzw. des zu prüfenden Wärmeübertragers 3) mit dem Prüffluid befüllt. Im vorliegenden Fall handelt es sich bei dem Prüffluid um eine 10-prozentige wässrige Ameisensäurelösung mit vorliegend 12 Litern Volumen. Zur Darstellung der 10-prozentigen Ameisensäurelösung werden 10,8 Liter entionisiertes Wasser mit 1,2 Liter Ameisensäure (98 bis 100 % reinst) vermischt. Nach der Initialisierung des Spülkreislaufs 2 wird der zu überprüfende Wärmeübertrager 3 in den Hauptkreislauf der Testanlage 1 eingebaut 20, indem die Verbindungselemente 8 mit dem Wärmeübertrager 3 verbunden werden (Verfahrensschritt 20).

Nach dem Einbau 20 des Wärmeübertragers 3 beginnt die Konditionierung 21 des Spülkreislaufs 2. Dazu wird die wässrige Ameisensäurelösung im geschlossenen Kreislauf aus Spülkreislauf 2 und Bypass 5 (Hauptkreislauf 4 wird umgangen) durch eine geeignet angesteuerte elektrische Pumpe 11 umgewälzt. Der im vorliegend dargestellten Ausführungsbeispiel gewählte Volumenstrom beträgt dabei etwa 300 Liter pro Stunde (vergleiche Tabelle 1). Gleichzeitig wird das Prüffluid mit Hilfe der Heizvorrichtung 12 auf eine Temperatur von 85° Celsius erhitzt. Die Konditionierungsphase 21 dauert im vorliegenden Ausführungsbeispiel ca. 1 Stunde.

Es wird darauf hingewiesen, dass Initialisierung 19. Einbau 20 des Wärmeübertragers 3 und Konditionierung 21 auch in abweichender Reihenfolge erfolgen können. Insbesondere ist es möglich, die Konditionierung 21 schon vor dem Einbau 20 des Wärmeübertragers 3 zu starten bzw. die Initialisierung 19 der Testanlage 1 erst nach dem Einbau 20 des Wärmeübertragers 3 durchzuführen.

Nach Ablauf der Konditionierungsphase 21 wird zunächst eine Blindprobe entnommen 22, um diese anschließend analysieren zu können. Vorliegend werden 0,5 Liter der Ameisensäurelösung entnommen, sodass für das weitere Verfahren 11,5 Liter Ameisensäurelösung im Spülkreislauf 2 verbleiben. Die Entnahme 22 der Blindprobe bleibt dank des Ausgleichsbehälters 9 für die Testanlage 1 ohne Bedeutung. Um die Entnahme 22 der Blindprobe über das Probenentnahmeventil 16 zu erleichtern wird gleichzeitig das Belüftungsventil 10 geöffnet.

Nunmehr beginnt der eigentliche Spülvorgang 23, bei dem das Spülfluid durch den zu testenden Wärmeübertrager 3 geleitet wird. Dazu wird der Bypass 5 durch Schließen des Schaltventils 6 geschlossen, während der Hauptkanal 4 durch Öffnen der beiden Schaltventile 7 geöffnet wird. Da der zu prüfende Wärmeübertrager 3 anfänglich nicht mit Spülfluid gefüllt ist befindet sich zunächst Luft im System. Um diese Luft möglichst schnell aus dem Spülkreislauf 2 zu entfernen (hierzu dient ebenfalls der Ausgleichsbehälter 9) wird die an die elektrische Pumpe 11 angelegte elektrische Spannung für kurze Zeit erhöht und der Volumenstrom durch den Wärmeübertrager 3 auf beispielsweise 1400 Liter pro Stunde erhöht. Nach dieser Anlaufphase wird die elektrische Pumpe 11 mit einer geeigneten, niedrigen Spannung angesteuert, sodass sich der für den jeweils zu prüfenden Wärmeübertrager 3 vorgesehene, aus Tabelle 2 ersichtliche Volumenstrom ergibt. Parallel dazu wird das Belüftungsventil 10 des Ausgleichsbehälters 9 geschlossen.

Der Spülvorgang 23 des Wärmeübertragers 3 erfolgt im vorliegend dargestellten Ausführungsbeispiel über vier Stunden hinweg (vergleiche Tabelle 1). Nach Ablauf der vier Stunden Spülzeit 23 wird der Spülkreislauf 2 durch Ausschalten der elektrischen Pumpe 11 abgeschaltet. Anschließend wird das Belüftungsventil 10 des Ausgleichsbehälters 9 geöffnet und über das Probenentnahmeventil 16 die eigentliche Analysenprobe entnommen 24. Da im Probenentnahmeventil 16 Flüssigkeit steht, werden sicherheitshalber zunächst ca. 2 Liter des Spülfluids abgelassen bevor die Analysenprobe gezogen wird (analog zur Blindprobe ca. 0,5 Liter). Im Anschluss danach wird der Spülkreislauf 2 der Testanlage 1 über die Ablassventile 17 vollständig entleert 25.

Nach der Entleerung 25 des Spülkreislaufs 2 wird der Spülkreislauf 2 gereinigt 26. Dazu wird beispielsweise nach dem Ablassen 25 des Spülfluids der Spülkreislauf 2 zweimal für ca. fünf Minuten mit Leitungswasser gefüllt und gespült. Anschließend reinigt man den Spülkreislauf 2 nochmals zweimal mit einer Salzsäurelösung, die aus ca. 11,5 Liter Leitungswasser und ca. 0,6 Liter 32-prozentiger Salzsäure hergestellt wird. Mit der Salzsäurelösung wird solange gespült bis bei eingeschalteter Heizvorrichtung 12 eine Temperatur von ca. 50° Celsius erreicht wird. Nach diesen beiden Reinigungsschritten spült man den Spülkreislauf 2 erneut mit Leitungswasser bis der gemessene ph-Wert der im Spülkreislauf 2 vorhandenen Flüssigkeit im Wesentlichen der Leitungswasserqualität entspricht. Diese Messung kann beispielsweise mit Hilfe eines ph-Meters erfolgen, das in den Spülkreislauf 2 eingebaut ist. Üblicherweise muss der letztmalige Reinigungsschritt etwa 3 bis 4 Mal für jeweils ca fünf Minuten durchgeführt werden.

Nach jedem Reinigungsschritt müssen alle Ventile 10, 16, 17 geöffnet werden, da nur so die komplette Lösung abgelassen werden kann.

Das eigentliche Analysenergebnis erhält man durch Analyse der Blindprobe (in Schritt 22 gezogen), Analyse der Analysenprobe (in Schritt 24 gezogen) und deren anschließenden Vergleich. Insbesondere kann man die beiden Proben auf ihren Kaliumgehalt gemäß DIN ISO9964-3 analysieren.

Die Berechnung der gelösten Flussmittelrestmenge kann unter Verwendung folgender Formel erfolgen:

$$FRW = (([K^+]_{AP} \cdot 11{,}5 \, | - [K^+]_{BP} \cdot 12{,}0 \, |) \cdot 100\% \, / \, K^+_{FR}\%) \cdot C$$

Wobei FRW der Gehalt an Flussmittelresten im zu prüfenden Wärmeübertrager 3 in mg, $[K^+]_{AP}$ den Kaliumgehalt in der Analysenprobe in mg/l, $[K^+]_{BP}$ den Kaliumgehalt in der Blindprobe in mg/l, $K^+_{FR}\%$ den prozentualen Kaliumanteil im verwendeten Flussmittel, sowie C einen für jedes Flussmittel spezifischen Korrekturfaktor bezeichnet.

**Bezugszeichenliste**

1. Testanlage
2. Spülkreislauf
3. Wärmeübertrager
4. Hauptkreislauf
5. Bypass
6. Schaltventil
7. Schaltventil
8. Verbindungselement
9. Ausgleichsbehälter
10. Belüftungsventil
11. elektrische Pumpe
12. Heizvorrichtung
13. Durchflussmesser
14. Durchflussmesssensor
15. Temperaturmesssensor
16. Probenentnahmeventil
17. Ablassventil
18. Ablaufdiagramm
19. Initialisierung
20. Einbau des Wärmeübertragers
21. Konditionierung
22. Blindprobenentnahme
23. Spülvorgang
24. Analysenprobeentnahme
25. Fluidablass
26. Reinigung

**Patentansprüche**

1. Verfahren (18) zur quantitativen Bestimmung von Löthilfsmittelresten, insbesondere von Flussmittelresten, die nach einem vorangehenden Bearbeitungsschritt an einem Werkstück (3) verbleiben, bei dem das Werkstück (3) mit einem Fluid beaufschlagt (23) wird, wobei es sich bei dem Werkstück (3) zumindest teilweise um eine Wärmeübertragervorrichtung (3) handelt, **dadurch gekennzeichnet, dass** aus der Konzentration an Löthilfsmittel im Fluid (22, 24) auf die nach dem vorangehenden Bearbeitungsschritt am Werkstück (3) verbliebene Menge an Löthilfsmittel geschlossen wird, und wobei das Werkstück (3) lediglich in einem Betriebskontaktbereich mit dem Fluid beaufschlagt wird, in dem das Werkstück (3) in einem normalen Betriebszustand mit einem Fluid, insbesondere mit einer Flüssigkeit, speziell mit einer wässrigen Flüssigkeit, in Kontakt kommt.

**2.** Verfahren (18) nach Anspruch 1, **dadurch gekennzeichnet, dass** für die Durchführung des Verfahrens (18) eine definierte Menge an Fluid verwendet wird.

**3.** Verfahren (18) nach Anspruch 1 oder 2, **dadurch gekennzeichnet, dass** es sich bei dem vorangehenden Bearbeitungsschritt um einen Lötvorgang handelt.

**4.** Verfahren (18) nach einem der vorangehenden Ansprüche, **dadurch gekennzeichnet, dass** das Werkstück (3) zumindest bereichsweise aus Aluminium, aus einer Aluminiumlegierung, aus Buntmetall und/oder aus einer Buntmetalllegierung gefertigt ist

**5.** Verfahren (18) nach einem der vorangehenden Ansprüche, **dadurch gekennzeichnet, dass** als Fluid eine wässrige Lösung, Wasser und/oder ein Kraftfahrzeug-Kühlmittel verwendet wird.

**6.** Verfahren (18) nach einem der vorangehenden Ansprüche, insbesondere nach Anspruch 5, **dadurch gekennzeichnet, dass** das Fluid neutral, alkalisch und/oder sauer ist.

**7.** Verfahren (18) nach einem der vorangehenden Ansprüche, **dadurch gekennzeichnet, dass** es zumindest zeitweise, vorzugsweise zumindest anfänglich, unter definierten Bedingungen, insbesondere hinsichtlich der Werkstücktemperatur, der Fluidtemperatur (15), der Zeitdauer des Messevorgangs, dem Fluiddurchsatz (13, 14) durch das Werkstück (3), der Zusammensetzung des Fluids, dem Druck und/oder der Zeitdauer der Messung (23) durchgeführt wird.

**8.** Verfahren (18) nach einem der vorangehenden Ansprüche, **dadurch gekennzeichnet, dass** es zumindest zeitweise und/oder zumindest teilweise als vorzugsweise geschlossenes Kreislaufverfahren (2) durchgeführt wird.

**9.** Verfahren (18) nach einem der vorangehenden Ansprüche, **dadurch gekennzeichnet, dass** zur Ermittlung von Messwerten Messsensoren (14, 15) verwendet werden und/oder Proben entnommen (16) werden.

**10.** Verfahren (18) nach einem der vorangehenden Ansprüche, **dadurch gekennzeichnet, dass** vor und/oder nach Durchführung einer Messung zumindest ein Reinigungsvorgang (26) durchgeführt wird.

**11.** Vorrichtung (1) zur Durchführung eines Verfahrens (18) nach einem der Ansprüche 1 bis 10, aufweizend zumindest einen Testanschluss (8), zumindest eine Pumpeinrichtung (11) und zumindest eine geschlossene Kreislaufeinrichtung (2, 4) **gekennzeichnet durch** eine elektronische Steuervorrichtung zum Erzargen folgenden Schrittes : Schlussin aus der Konzentration an Löthiffsmittel im Fluid auf die nach dem vovangehinden Beanbeitungschritt, am Werkstück verbleibondin Minge an Löthilfsmittel.

**12.** Vorrichtung (1) nach Anspruch 11, **gekennzeichnet durch** zumindest einen Ausgleichbehälter (9), zumindest eine Temperiereinrichtung (12), zumindest eine Sensoreinrichtung (14, 15), zumindest eine vorzugsweise steuerbare Fluidzuführmöglichkeit, zumindest eine vorzugsweise steuerbare Fluidentnahmemöglichkeit (16, 17) und/oder zumindest eine Bypasseinrichtung (5).

**13.** Verfahren zur Dimensionierung eines Werkstücks (3) und/oder eines sonstigen Bauteils, **dadurch gekennzeichnet, dass** bei der Auslegung des Werkstücks (3) und/oder des sonstigen Bauteils die Belastung des Werkstücks (3) und/oder des sonstigen Bauteils die vom Werkstück stammenden Löthilfsmittelreste, insbesondere die Flussmittelreste, berücksichtigt werden, wobei ein Verfahren (18) nach einem der Ansprüche 1 bis 10 und/oder eine Vorrichtung (1) nach Anspruch 11 oder 12 verwendet wird.

**Claims**

**1.** A method (18) for the quantitative determination of soldering aid residues, particularly of flux material residues, which remain on a workpiece (3) after a preceding processing step, in which the workpiece (3) is acted upon by a fluid (23), wherein said workpiece (3) is at least in part a heat exchanger device (3), **characterised in that** the soldering aid amount remaining on the workpiece (3) after the preceding processing step is derived from the soldering aid concentration in the fluid (22, 24), and wherein the workpiece (3) is acted upon by the fluid only in an operation-related contact area, where the workpiece (3) in a normal operating state comes into contact with a fluid, particularly with a liquid, especially with an aqueous liquid.

**2.** The method (18) according to claim 1, **characterised in that** a defined volume of fluid is used to carry out the method (18).

**3.** The method (18) according to claim 1 or 2, **characterised in that** the preceding processing step is a soldering process.

**4.** The method (18) according to any one of the preceding claims, **characterised in that** the workpiece (3) is made at least in sections of aluminium, of an aluminium alloy, of nonferrous metal and/or of a nonferrous metal alloy.

**5.** The method (18) according to any one of the preceding claims, **characterised in that** an aqueous solution, water and/or a vehicle coolant are used as said fluid.

**6.** The method (18) according to any one of the preceding claims, particularly according to claim 5, **characterised in that** said fluid is neutral, alkaline and/or acidic.

**7.** The method (18) according to any one of the preceding claims, **characterised in that** it is carried out at least at times, preferably at least initially, under defined conditions, particularly with respect to the workpiece temperature, the fluid temperature (15), the duration of the measuring process, the fluid throughput (13, 14) through the workpiece (3), the composition of the fluid, the pressure and/or the duration of the measurement (23).

**8.** The method (18) according to any one of the preceding claims, **characterised in that** it is carried out at least at times and/or at least partially as a preferably closed circulation process (2).

**9.** The method (18) according to any one of the preceding claims, **characterised in that** measurement sensors (14, 15) are used and/or samples are taken (16) to determine the measured values.

**10.** The method (18) according to any one of the preceding claims, **characterised in that** at least one cleaning process (26) is carried out before and/or after a measurement.

**11.** An apparatus (1) for carrying out a method (18) according to any one of claims 1 through 10, having at least one test connection (8), at least one pump device (11) and at least one closed circulation device (2, 4), **characterised by** an electronic control device for generating the following step: deriving the soldering aid amount remaining on the workpiece after the preceding processing step from the soldering aid concentration in the fluid.

**12.** The apparatus (1) according to claim 11, **characterised by** at least one equalising tank (9), at least one temperature control device (12), at least one sensor device (14, 15), at least one preferably controllable fluid supply option, at least one preferably controllable fluid removal option (16, 17) and/or at least one bypass device (5).

**13.** A method for dimensioning a workpiece (3) and/or another component, **characterised in that** the load of soldering aid residues originating from the workpiece, especially flux material residues, on the workpiece (3) and/or the other component is taken into account in the design of the workpiece (3) and/or other component, wherein a method (18) according to any one of claims 1 through 10 and/or an apparatus (1) according to claim 11 or 12 are used.

**Revendications**

**1.** Procédé (18) servant à la détermination quantitative de résidus d'agent auxiliaire de brasage, en particulier de résidus de fondant, qui subsistent sur une pièce d'usinage (3) après une étape de traitement effectuée antérieurement, procédé dans lequel la pièce d'usinage (3) est sollicitée (23) par un fluide où, concernant la pièce d'usinage (3), il s'agit au moins partiellement d'un dispositif d'échangeur de chaleur (3), **caractérisé en ce que**, à partir de la concentration en agent auxiliaire de brasage dans le fluide (22, 24), on en déduit la quantité résiduelle d'agent auxiliaire de brasage sur la pièce d'usinage (3) après l'étape de traitement effectuée antérieurement, et où la pièce d'usinage (3) est sollicitée par le fluide seulement dans une zone de contact fonctionnel dans laquelle la pièce d'usinage (3), dans un état de fonctionnement normal, vient au contact d'un fluide, en particulier un liquide, spécialement un liquide aqueux.

**2.** Procédé (18) selon la revendication 1, **caractérisé en ce qu'**une quantité définie de fluide est utilisée pour l'exécution du procédé (18).

**3.** Procédé (18) selon la revendication 1 ou 2, **caractérisé en ce que**, concernant l'étape de traitement effectuée antérieurement, il s'agit d'un processus de brasage.

**4.** Procédé (18) selon l'une quelconque des revendications précédentes, **caractérisé en ce que** la pièce d'usinage (3) est fabriquée au moins partiellement en aluminium, dans un alliage d'aluminium, dans un métal non ferreux et / ou dans un alliage de métaux non ferreux.

**5.** Procédé (18) selon l'une quelconque des revendications précédentes, **caractérisé en ce que** l'on utilise, comme fluide, une solution aqueuse, de l'eau et / ou un moyen de refroidissement d'un véhicule automobile.

**6.** Procédé (18) selon l'une quelconque des revendications précédentes, en particulier selon la revendication 5, **caractérisé en ce que** le fluide est neutre, alcalin et / ou acide.

**7.** Procédé (18) selon l'une quelconque des revendications précédentes, **caractérisé en ce que** ledit procédé est exécuté, au moins par moments, de préférence au moins au début, suivant des conditions définies, en particulier concernant la température de la pièce d'usinage, la température (15) du fluide, la durée du processus de mesure, le débit de fluide (13, 14) traversant la pièce d'usinage (3), la composition du fluide, la pression et / ou la durée du processus de mesure (23).

**8.** Procédé (18) selon l'une quelconque des revendications précédentes, **caractérisé en ce que** ledit procédé est exécuté, au moins par moments et / ou au moins partiellement, de préférence comme un procédé en circuit fermé (2).

**9.** Procédé (18) selon l'une quelconque des revendications précédentes, **caractérisé en ce que**, pour la détermination de valeurs mesurées, on utilise des capteurs de mesure (14, 15) et / ou des échantillons sont prélevés (16).

**10.** Procédé (18) selon l'une quelconque des revendications précédentes, **caractérisé en ce qu'**au moins un processus de nettoyage (26) est effectué avant et / ou après l'exécution d'un processus de mesure.

**11.** Dispositif (1) servant à l'exécution d'un procédé (18) selon l'une quelconque des revendications 1 à 10, présentant au moins un raccordement de test (8), au moins un dispositif à pompe (11) et au moins un dispositif en circuit fermé (2, 4), **caractérisé par** un dispositif de commande électronique servant à la production de l'étape suivante : à partir de la concentration en agent auxiliaire de brasage dans le fluide, en déduire la quantité résiduelle d'agent auxiliaire de brasage sur la pièce d'usinage, après l'étape de traitement effectuée antérieurement.

**12.** Dispositif (1) selon la revendication 11, **caractérisé par** au moins un réservoir de compensation (9), par au moins un dispositif d'équilibre de la température (12), par au moins un dispositif à capteurs (14, 15), par au moins une possibilité d'alimentation en fluide pouvant de préférence être pilotée, par au moins une possibilité de prélèvement de fluide (16, 17) pouvant de préférence être pilotée et / ou par au moins un dispositif de dérivation (5).

**13.** Procédé servant au dimensionnement d'une pièce d'usinage (3) et / ou d'un composant autre, **caractérisé en ce que**, lors de la configuration de la pièce d'usinage (3) et / ou du composant autre, on prend en considération la contrainte subie par la pièce d'usinage (3) et / ou par le composant autre, les résidus d'agent auxiliaire de brasage, en particulier les résidus de fondant, provenant de la pièce d'usinage, où l'on utilise un procédé (18) selon l'une quelconque des revendications 1 à 10 et / ou un dispositif (1) selon la revendication 11 ou 12.

Fig.1

| Parameter | Sollwert Konditionierung | Sollwert Spülung |
|---|---|---|
| Volumenstrom | 300 ± 10 l/h | Tabelle 2 |
| Temperatur | Aufheizen auf 85 ± 1,5 °C | 85 ± 1,5 °C |
| Druck | Erhöhung auf 2,3 bar | 2,3 bar |
| Dauer | 1 ± 0,1 h | 4 ± 0,1 h |
| Ameisensäurelösungsmenge | 12 ± 0,1 l | 1,5 ± 0,1 l |

Tabelle 1: Spülbedingungen

| Aluminiumwärmetauscher | Volumenstrom |
|---|---|
| Niedertemperatur-Kühlmittelkühler | 520 ± 10 l/h |
| Hochtemperatur-Kühlmittelkühler | 1145 ± 10 l/h |
| Heizkörper | 265 ± 10 l/h |
| Integrierter Ladeluftkühler | 530 ± 10 l/h |
| Ölkühler | 580 ± 10 l/h |

Tabelle 2: Volumenströme

19

18

20

21

22

23

24

25

26

Fig 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3840098 C1
- JP 04172171 A

- JP 04172171 B